# EUROPÄISCHE PATENTSCHRIFT

(11) **EP 0 853 532 B1**
(45) Veröffentlichungstag und Bekanntmachung des Hinweises auf die Patenterteilung: **03.11.1999**
(21) Anmeldenummer: 96933319.4
(22) Anmeldetag: 20.08.1996
(51) Int. Cl.: B27G 13/04, B27G 13/00, B23C 5/00

(54) **HOBELMASCHINE, INSBESONDERE HANDHOBELMASCHINE**
PLANING MACHINE, IN PARTICULAR MANUAL PLANING MACHINE
RABOTEUSE, NOTAMMENT RABOTEUSE MANUELLE

(30) Priorität: 02.10.1995 DE 19536559
(43) Veröffentlichungstag der Anmeldung: 22.07.1998
(73) Patentinhaber: ROBERT BOSCH GMBH, 70442 Stuttgart (DE)
(72) Erfinder: ZAISER, Adolf, D-73257 Koengen (DE)
(86) Internationale Anmeldenummer: DE9601573
(87) Internationale Veröffentlichungsnummer: WO9712734

(56) Entgegenhaltungen:
- EP-A- 0 117 991
- EP-A- 0 428 996
- CH-A- 638 131
- CH-A- 682 470
- FR-A- 2 200 089
- US-A- 3 199 799

## Beschreibung

### Stand der Technik

Die Erfindung geht aus von einer Handhobelmaschine nach der Gattung der Ansprüche 1 und 26.

Durch DE-PS 91 52 65 ist eine Hobelmaschine mit einer Hobelwelle bekannt, die sich über ihre Breite erstreckende Hobelmesser trägt, die durch ebenfalls von der Hobelwelle getragene, fliehkraftbetätigte Spannkeile, d.h. durch sogenannte Fliehkeile, gespannt werden. Die Fliehkeile sind durch Federn elastisch vorgespannt und stützen sich in einer Längsnut zwischen dem Hobelmesser und der Hobelwelle ab. Je höher die Drehzahl der Hobelwelle ist, umso größer ist die die Fliehkeile radial nach außen drückende Kraft. Demzufolge wächst mit steigender Drehzahl der Hobelwelle die Spannkraft, mit der die Hobelmesser gegenüber der Hobelwelle festgehalten werden. Daraus wird klar, daß die Fliehkeile mit verhältnismäßig geringer Reibung bis in ihre maximale Spannposition in der Nut radial nach außen verschiebbar sein müssen, um rasch ihre optimale Spannwirkung erreichen zu können. Dies bedingt eine hohe Maßgenauigkeit und Oberflächengüte der Fliehkeile und Längsnuten. Anderenfalls wäre nicht auszuschließen, daß die Spannkeile in der Längsnut vor Erreichen der Spannposition und bei zu geringer Spannkraft verkanten, so daß die Hobelmesser während der Arbeit mit dem Hobel ihre Lager verändern und aus der Hobelwelle geschleudert werden könnten - mit entsprechender Verletzungsgefahr für Menschen und Material in der Nähe des Arbeitsortes.

Die Hobelwelle der bekannten Hobelmaschine trägt für jedes Hobelmesser und für jeden zugehörigen Fliehkeil je eine gesonderte Längsnut. Die Längsachsen der Nuten verlaufen parallel, aber die Querachsen zwischen den Nutflanken verlaufen winklig zueinander. Dadurch ist die Herstellung der Hobelwelle bzw. der Nuten weiter erschwert. Dies erhöht die Herstellungskosten für die bekannte Hobelmaschine erheblich. Zum Wechseln der Hobelmesser bei nachlassender Schneidenschärfe müssen die selbsthemmend gespannten Fliehkeile entgegen der Federvorspannung über ihre gesamte Länge mit einem Spezialwerkzeug radial nach innen verschoben werden, damit die Klemm- und Spannwirkung aufgehoben ist.

Aus der EP 0117 991 ist eine Hobelmaschine mit einer aus Profilscheiben bestehenden Hobelwelle bekannt, in deren Längsnut ein loser Fliehkeil zum Spannen des Hobelmessers angeordnet ist. Die Herstellungskosten der Hobelwelle und der Fliehkeile sind aufgrund der hohen erforderlichen Maßgenauigkeit hoch. Der Hobelmesserwechsel ist zeitaufwendig, weil der lose Fliehkeil selbsthemmend in der Längsnut gegenüber dem Hobelmesser verkeilt ist und nur eine verhältnismäßig kleine Angriffsfläche für ein Spezialwerkzeug zum Zurückschieben des Fliehkeils bietet. Dieser bzw. das Hobelmesser wird häufig zum Hobelmeserwechsel losgeklopft, wobei die Schneide bzw. die Hobelwelle beschädigt werden kann.

### Vorteile der Erfindung

Die erfindungsgemäße Hobelmaschine mit den kennzeichnenden Merkmalen des Anspruchs 1 bzw. die erfindungsgemäße Hobelwelle mit den kennzeichnenden Merkmalen des Anspruchs 26 hat demgegenüber den Vorteil, daß die Hobelwelle gemeinsam mit dem Fliehkeil und der Feder aus nur wenigen, einfach herstellbaren Einzelteilen - im besten Fall aus nur einem einzigen Teil - herstellbar ist, wobei geringere Herstellungs-, Montage- und Lagerhaltungskosten als für bisherige Hobelmaschinen entstehen.

Die erfindungsgemäße Hobelwelle ist leichter, handlicher, einfacher auswuchtbar und unwuchtstabiler als bisherige Hobelwellen. Außerdem sind die Hobelmesser ohne gesondertes Hilfwerkzeug schnell spannbar bzw. sie können ohne bzw. mit einem einfachen Werkzeug schnell gelöst und entnommen werden.

Dadurch, daß der Fliehkeil allein durch die Feder unverlierbar und nicht zerstörungsfrei demontierbar sowie ohne Berührung der Hobelwelle gegenüber dieser bewegbar festgehalten wird bzw. dadurch, daß der Fliehkeil gegenüber der Feder und diese gegenüber der Hobelwelle unverstellbar festgelegt sind, ist eine bei der Endmontage einmal justierte Position des Fliehkeils stabil. So bleibt der ideale Justierzustand während der Lebensdauer der Hobelwelle erhalten. Insbesondere das in der Praxis häufige ungewollte Verstellen der Justierlage des Hobelmessers wird damit sicher verhindert.

Dadurch, daß die den Fliehkeil bildende Feder mit dem Fliehkeil schwenkbar gegenüber der Hobelwelle im wesentlichen innerhalb ihrer Außenkontur gelagert ist und dadurch, daß die Feder und der Fliehkeil einstückig miteinander verbunden sind und/oder dadurch, daß die mindestens eine Nut eine Blattfeder mit einem sich daran anschließenden, sich zu einem Fliehkeil verdickenden Bereich der Hobelwelle gebildet wird und/oder dadurch, daß die Feder und der Fliehkeil ein gesondertes, in die Hobelwelle unverlierbar, vorzugsweise gelenkig gelagert, eingesetztes Teil bilden und/oder dadurch, daß die Hobelwelle die Feder und den Fliehkeil bilden bzw. dadurch, daß die Feder gemeinsam mit dem Fliehkeil durch einen teilweisen Ein- bzw. Ausschnitt der Hobelwelle gebildet werden, sind gesonderte Führungen für den Fliehkeil nicht notwendig, so daß der Herstellungs- und Wartungsaufwand für die Hobelmaschinen weiter verringert ist.

Die Hobelwelle ist dadurch besonder kostengünstig herstellbar, daß der Ein- bzw. Ausschnitt der Hobelwelle eine achsparallele, die Außenkontur durchdringende, durchgehende Längsnut ist, wobei ein radialer, gerader Bereich der Längsnut mit zwei Nutflanken zum backenartigen Spannen des Hobelmessers dient und wobei die Längsnut radial innen bogenartig in die Kontur eines Hohlraums übergeht und damit die Kontur des Fliehkeils bestimmt.

Das Hobelmesser ist bei Stillstand der Hobelwelle ohne die fliehkraftbedingte Spannwirkung der Fliehkeile dadurch gegen Verlieren und Verstellen gesichert, daß die Nutbreite des geraden Bereichs geringfügig kleiner als die Stärke des Hobelmessers ist.

Eine besonders sichere Variante der erfindungsgemäßen Hobelwelle ergibt sich dadurch, daß der bogenartige Bereich der Längsnut nach außen bis nahe zur Außenkontur der Hobelwelle führt und dort entgegen bzw. in Drehrichtung parallel und radial nach innen in Richtung zur Längsnut zurückführt, wobei der bogenartige Bereich U-förmig oder C-förmig ausgebildet ist, so daß beim Bruch der Feder der Fliehkeil und das Hobelmesser radial nicht aus der Hobelwelle treten können.

Dadurch, daß neben der ersten eine zweite, in eine bogenförmige Nut übergehende Längsnut angeordnet sein kann, wobei zwischen den beiden Nuten die Feder und der Fliehkeil gebildet werden, ist eine weitere vorteilhaft herstellbare Variante der erfindungsgemäßen Hobelwelle geschaffen.

Die Spannwirkung des Fliehkeils tritt besonders gleichmäßig und kontrolliert ein, dadurch daß der Fliehkeil radial verschwenkbar ist, wobei er an der Blattfeder hängend elastisch geführt ist, wobei er unter einem Winkel zur Anlage an das Hobelmesser kommt d.h. aufgleitet, der ein selbsthemmungsfreies Spannen sichert. Dadurch kann der Fliehkeil bei Stillstand der Hobelwelle in seine ursprüngliche Löseposition zurückkehren.

Das Hobelmesser ist präzise und reproduzierbar gegenüber der Hobelwelle positioniert, dadurch, daß die hobelwellenseitige Nutflanke des geraden Bereichs der Längsnut in eine rechtwinklige Stufe in Richtung zum Fliehkeil hin übergeht und dort einen nasenartigen Vorsprung bildet und wobei die Stufe als Anschlagfläche für die gegenüber der Hobelwelle radial nach innen weisende Schneide eines Wende-Hobelmessers, insbesondere Hartmetall-Hobelmesser, dient und damit die Position der radial nach außen weisenden Schneide bzw. den Flugkreis besonders genau bestimmt.

Die Hobelwelle wird besonders sicher hinsichtlich arbeitsschutztechnischer Belange, dadurch, daß der Vorsprung auf der der Stufe abgewandten Seite als Anschlag für den Fliehkeil zur Begrenzung seiner radialen Auslenkung nach außen dient.

Der Bedienkomfort zum Entnehmen bzw. Wechsel des Hobelmessers wird dadurch verbessert, daß sich die Nut im Anschluß an den Vorsprung verbreitert und einen Hohlraum zum Eingriff eines Schraubendrehers oder dergl. zum Verschwenken des Fliehkeils bildet.

Das Hobelmesser wird noch sicherer gegen Verlieren, dadurch daß die hobelwellenseitige Nutflanke eine Längsrippe zum sichernden Eingriff in eine Rückennut des Hobelmessers hat, wobei der Querschnitt der Längsrippe kleiner als die Rückennut des Hobelmessers ist.

Die Herstellung der Hobelwelle wird erheblich vereinfacht, indem sie aus axial nebeneinander angeordneten, scheibenartigen Profilplatten, insbesondere aus Federblech, besteht und indem die Profilplatten miteinander vernietet, verschweißt, verpreßt, umspritzt oder dergl. verbunden sind.

Das Hobelmesser wird dabei noch sicherer gegen Verlieren dadurch, daß die Profilplatten einen Abschnitt der Längsnut tragen, wobei die Nutbreite mindestens einer der äußeren Profilplatten der Hobelwelle kleiner als die Stärke des Hobelmessers ist, wobei das Hobelmesser durch den einen engen Nutabschnitt, insbesondere bei Stillstand der Hobelwelle, gegen axiales Verschieben festgehalten wird.

Der Hobelmesserwechsel wird dadurch bequem und sicher, daß das Hobelgehäuse mindestens eine seitliche Durchtrittsöffnung zum Einsetzen und Entnehmen des Hobelmessers in die Hobelwelle trägt.

Eine noch leistungsfähigere Variante der erfindungsgemäßen Hobelmaschine ergibt sich dadurch, daß die Längsnut in der Außenkontur der Hobelwelle schräg, insbesondere spiralig gewunden gegenüber der Längsachse der Hobelwelle verläuft und zur Aufnahme eines Spiral-Hobelmessers dient, das elastisch, der gewundenen Längsnut anpaßbar ist und sich gegen Verlieren bzw. gegen ungewollte Lageveränderung in der Längsnut selbst festhält.

Dem Bedienkomfort zum schnellen Messerwechsel dient, daß sich im Inneren der Hobelwelle in der Längsnut am Fliehkeil ein gleitend oder rollend angeordneter Spreizkeil abstützt, der bei Drehung der Hobelwelle den Fliehkeil in seiner Spannstellung arretiert und bei Stillstand der Hobelwelle arretiert hält, wobei er durch radiales Verschieben den Fliehkeil freigibt und als Schnellösemittel zum Wechseln des Hobelmessers dient.

Die Hobelwelle als Ersatzteil der erfindungsgemäßen Hobelmaschine hat die vorbeschriebenen Vorteile, wenn sie nach einem der kennzeichnenden Merkmale der vorhergehenden Ansprüche ausgestaltet ist.

Dadurch, daß die Hobelwelle selbst den Fliehkeil und die Feder zum Spannen der Hobelmesser bildet, trägt die Hobelwelle außer den Hobelmessern keine gesonderten Teile, so daß Gewindebohrungen und dergl. entfallen und dadurch die Hobelwelle einfach herstellbar ist.

Wenn der Fliehkeil und die Feder einstückig miteinander und als gesondertes Teil unverlierbar mit der Hobelwelle verbunden sind, ergibt sich eine besonders kostengünstige Herstellungsvariante für die Hobelwelle aus zwei einfach herstellbaren Einzelteilen, die leicht miteinander verbindbar sind.

Mit entsprechender Dimensionierung der Fliehkeildicke bzw. des Fliehkeilgewichts und der Blattfederstärke kann die erfindungsgemäße Hobelwelle sehr genau auf die vorgesehene drehzahlabhängige Spannkraft zugeschnitten werden.

Ein besonderer Vorteil der Erfindung besteht darin, daß der Fliehkeil nicht wie bei losen Spannkeilen zum Sichern gegen Verlieren, sich in der Spannstellung selbsthemmend festhalten muß, sondern selbsttätig in die Lösestellung zurückkehren kann, weil durch die erfindungsgemäße Ausgestaltung das Verlieren der Fliehkeils ausgeschlossen ist.

Ein vorteilhafte Ausführungsform der Erfindung für den speziellen Einsatzzweck des Rustikalhobelns ergibt sich durch Verwendung eines Wellhobelmessers als Hartmetallplatte im 1,1x1,5 Format mit minimalem Werkstoffaufwand und geringer Masse, das herkömmlichen Hartmetall-Wendeplatten im 1,1x1,5 Format mit Rückennut entspricht, das aber insbesondere mit nur einer einzigen Schneidenseite versehen ist.

### Zeichnung

Mehrere Ausführungsbeispiele der Erfindung sind nachstehend anhand der Beschreibung und einer zugehörigen Zeichnung erläutert.

Es zeigen
Figur 1 eine Seitenansicht einer erfindungsgemäßen Hobelmaschine,
Figur 2 eine raumbildliche Darstellung der zugehörigen Hobelwelle,
Figur 3 eine Draufsicht auf die Hobelwelle nach Figur 2 mit teilweise eingezeichneter Wellmesserkontur,
Figur 4 eine Seitenansicht der Hobelwelle gemäß Figur 2,
Figuren 5 und 6 eine vergrößerte Seitenansicht der Hobelwelle gemäß Figur 2 bis 4 bei maximal radial nach innen bzw. außen ausgelenktem Fliehkeil,
die Figuren 7 bis 14 vergrößerte Teile der Seitenansichten unterschiedlicher Ausführungsbeispiele der erfindungsgemäßen Hobelwelle
und die Figuren 15, 16 scheibenartige, die erfindungsgemäße Hobelwelle bildende Segmente.

### Beschreibung des Ausführungsbeispiels

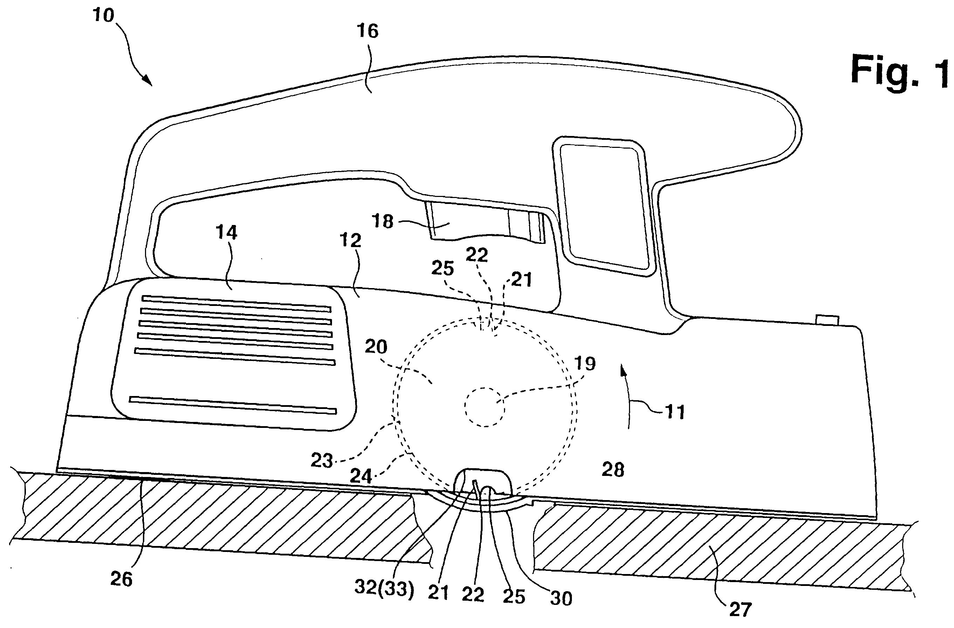

Eine in Figur 1 in der Seitenansicht gezeigte Hobelmaschine 10 ist als Handhobelmaschine ausgestaltet und besteht aus einem Maschinengehäuse 12 mit einem Motorgehäuse 14 und einem Handgriff 16. Der Handgriff 16 trägt einen elektrischen Schalter 18.

Im Maschinengehäuse 12 ist um ihre Achse 19 in Richtung des Drehrichtungspreils 11 drehbar eine Hobelwelle 20 gelagert, die Hobelmesser 21 mit Schneiden 22 trägt, vor denen in die Außenkontur 23 der Hobelwelle 20 Spannuten 25 eingeformt sind. Bei Drehung der Hobelwelle 20 bestimmen die Messer 19 mit ihren Schneiden 22 einen strichpunktiert gezeichneten Flugkreis 24, der über die als Sohle 26 ausgestaltete Grundfläche der Handhobelmaschine 10 hinausragt, damit die Schneiden 22 spanend in ein bündig mit der Sohle 26 verlaufendes Werkstück 27 eingreifen können. Eine in der Sohle 26 angeordnete Öffnung 28 zum Durchtritt der Schneiden 22 ist durch eine Pendelschutzhaube 30 verschließbar. Diese schließt die Öffnung 28 selbsttätig, sobald die Handhobelmaschine 10 vom Werkstück 27 abgehoben wird. Dadurch wird die Verletzungsgefahr für den Bedienenden an den rotierenden Schneiden 22 vermindert.

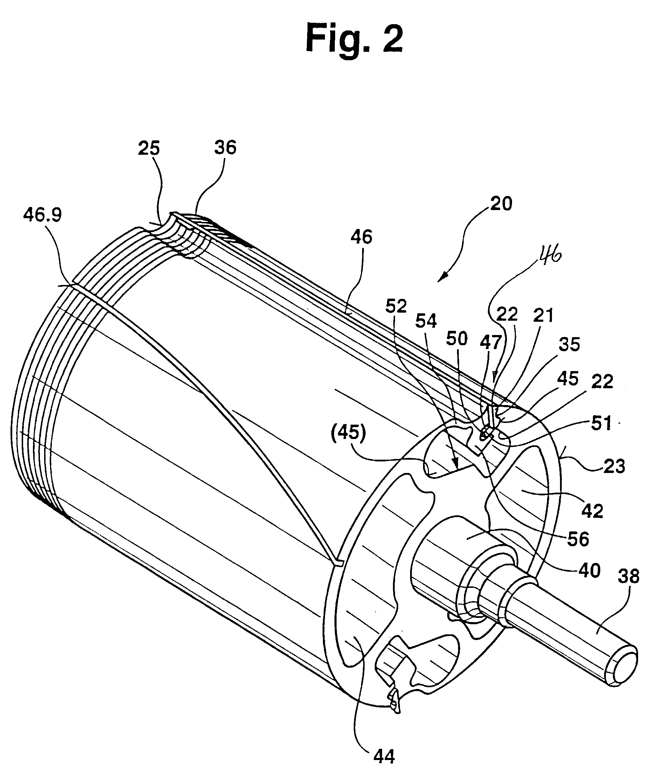

Das Maschinengehäuse 14 weist auf beiden Seiten der Hobelwelle 20 Ausnehmungen 32, 34 auf, durch die hindurch von der Seite aus die als Wendemesser mit zwei Schneiden ausgestalteten Hobelmesser 21 der Hobelwelle 20 entnommen bzw. in diese eingesetzt werden können, ohne daß zum Spannen mehr als das seitliche Einschieben nötig wäre, weil sich die Hobelmesser 21 durch nachstehend zu Figur 2 erläuterte Fliehkeile selbsttätig bei Inbetriebnahme des Handhobels 10 gespannt werden.

Die in Figur 2 gezeigte Hobelwelle 20 hat eine im wesentlichen kreisförmige Außenkontur 23. Die Hobelwelle 20 wird aus einem durchgehenden Paket im wesentlichen identischer Profilscheiben 36 gebildet, von denen nur die ersten sieben in Betrachtungsrichtung links befindlichen zeichnerisch hervorgehoben sind. Diese sind axial auf einer Zentrierwelle 38 von beiden äußeren Seiten mittels Spannkörpern 40 gegeneinander verspannt, wobei die Spannkörper 40 beispielsweise als auf die Zentrierwelle 38 geschraubte Gewindemuttern ausgestaltet sein können. Die Profilscheiben 36 haben zur Gewichtsverringerung zwei gegenüberliegende Ausnehmungen, die Hohlräume 42, 44 bilden. Die Hohlräume 42, 44 dienen zum Eingriff von Justierdornen, mit denen die Profilscheiben 36 relativ zueinander positioniert werden, so daß der Verlauf der Längsnut 46 gerade ausgerichtet aber auch schräg bzw. spiralig bestimmt werden kann. Die Hohlräume 42, 44 dienen auch zur Gewichtsverringerung der Hobelwelle 20 bzw. zur Aufnahme des Ausspritz-Kunststoffs zur Paketierung der Profilscheiben.

Die Hobelwelle 20 trägt auf zwei gegenüberliegenden Seiten die Hobelmesser 21, die als dünne Hartmetall-Mini-Wendeplatten mit zwei Schneiden 22 und einer Rückennut 35 versehen sind.

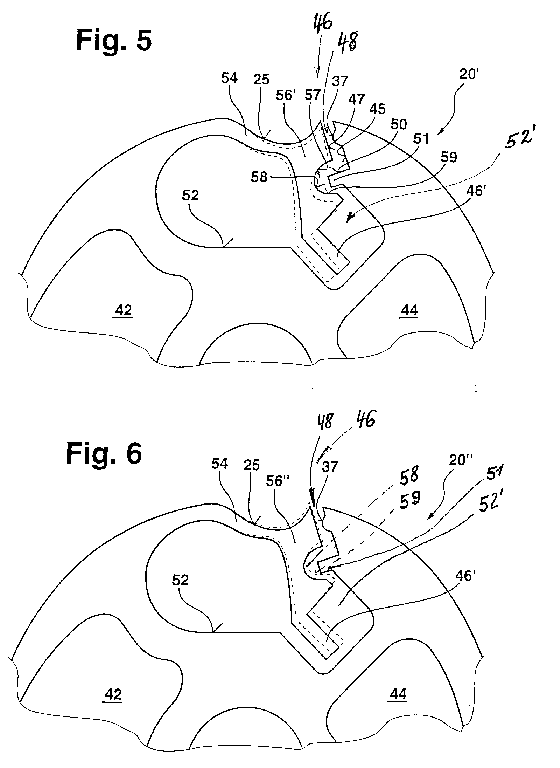

Die Hobelmesser 21 werden in einer Längsnut 46 in der Hobelwelle 20 zwischen Nutflanken 45, 47 des radial geraden Bereichs 48 einer Längsnut 46 gespannt. Die Längsnut 46 geht von der Außenkontur 23 ausgehend über eine in die Rückennut 35 eingreifende Längsgrippe 37 (siehe Fig. 5, 6, 15, 16) radial nach innen führend mit der rechten Nutflanke 45 in eine Querstufe 50 über und von dort in einen rechtwinkligen, geraden Vorsprung 51. An den Vorsprung 51 anschließend weitet sich die Längsnut 46 zu einem geschwungen konturierten Hohlraum 52 aus. Die geschwungene Kontur der Nutflanke 45 ist so geführt, daß ein dünner Bereich zwischen dem Hohlraum 52 und der Außenkontur 23 der Hobelwelle eine Blattfeder 54 bildet, die sich zu einem Fliehkeil 56 verdickt bzw. in diesen übergeht.

Der Fliehkeil 56 umgreift mit einer Fangnut 58 bzw. mit seinen Nutflanken 57, 59 den Vorsprung 51 und bildet mit seiner radial nach außen führenden, geraden Seite die linke Nutflanke 47 der Längsnut 46, an die sich radial außen die Spannut 25 anschließt. Die Nutflanke 47 ist unter einem derartigen Winkel gegenüber der gegenüberliegenden Nutflanke 45 ausgeführt, daß sich in der Spannstellung bei Anliegen des Fliehkeils 56 an der Flachseite eines Hobelmessers 21 keine Selbsthemmung zwischen dem Fliehkeil 56 und dem Hobelmesser 21 aufbaut, so daß der Fliehkeil 56 immer wieder in seine Löseposition zurückkehren kann, sobald die Hobelwelle 20 stillsteht und keine Fliehkraft wirkt. Dies erleichtert den Hobelmesserwechsel erheblich.

Eine Fangnut 58 begrenzt den radialen Hub des Fliehkeils 56 sowohl nach innen als auch nach außen, um eine Überdehnung der Blattfeder 54 zu vermeiden.
Zeichnerisch nicht hervorgehoben ist, daß bei der äußersten Profilscheibe 36 in Betrachtungsrichtung links die Längsnut 46 enger ist als bei den übrigen Profilscheiben, damit das Hobelmesser 21 auch bei Stillstand der Hobelwelle 20 nicht ungewollt seine Lage verändern kann bzw. verloren geht. Zum Lösen dieser Vorspannung kann beispielsweise ein Schraubendreher oder eine passende Sechskantwelle in den Hohlraum unter den Fliehkeil 56 der äußersten Profilscheibe 36 geschoben und damit in seine Löseposition geschwenkt werden, in der das Hobelmesser 21 durch Senkrechtstellen der Hobelwelle 20 bzw. des Hobels 10 von selbst aus der Längsnut 56 herausgleitet.

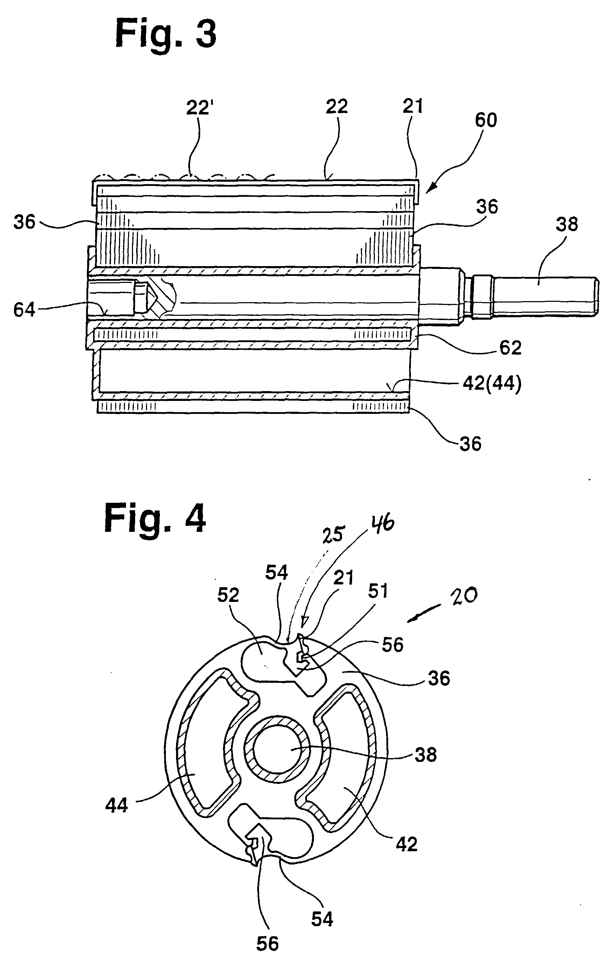

Die in Figur 3 gezeigte Seitenansicht einer Hobelwelle 60 zeigt die Zentrierwelle 38, die das Paket von Profilscheiben 36 trägt. Die Profilscheiben 36 werden über eine Kunststoffschicht 62 gegeneinander verspannt und bilden einen massiven Körper, der die Hobelmesser 21 trägt. Die Zentrierwelle 38 trägt auf der linken Seite eine Lagerbohrung 64 zur Drehbefestigung der Hobelwelle 60 am Maschinengehäuse. Es ist zu erkennen, daß die Kunststoffschicht 62 auch in die Hohlräume 42, 44 eingespritzt ist, so daß die Spann- bzw. Haltewirkung auf das Paket der Profilscheiben 36 noch erhöht wird. In Betrachtungsrichtung oben trägt die Hobelwelle 60 das Hobelmesser 21 mit der geraden Schneide 22, über die links der senkrechten Symmetrieachse eine Wellenschneide 22' strichpunktiert eingezeichnet ist, die damit die Austauschbarkeit des geraden Hobelmessers 21 gegen ein Wellmesser zeigt.

Die Figuren 4, 5 und 6 zeigen den Querschnitt bzw. eine Seitenansicht des Pakets der Profilscheiben 36 identisch oder in einer geringfügig geänderten Variante, d.h. die Seitenansicht einer einzelnen Profilscheibe 36.

Figur 4 läßt deutlich die Außenkontur 23 der Hobelwelle 20 bzw. der Profilscheibe 36, die Hobelmesser 21, die Spannuten 25, die Zentrierwelle 38, die Hohlräume 42, 44, die Vorsprünge 51, die Blattfedern 54 mit den benachbarten Hohlräumen 52 und die Fliehkeile 56 mit den Fangnuten 58 erkennen.

Die Figur 5 zeigt den Fliehkeil 56' der Hobelwelle 20' in durchgehenden Linien gezeichnet in seiner Normalposition bei Stillstand der Hobelwelle 20 und in der gestrichelt gezeichneten Position radial nach unten verschoben in der Freigabeposition für das nichtdargestellte Hobelmesser. Dabei sind die Spannut 25, die Längsrippe 37, die Hohlräume 42, 44, 52, die Längsnut 46 mit den Nutflanken 45, 47 des radial gerade verlaufendem Bereichs 48, die Querstufe 50, der Vorsprung 51 und die Fangnut 58 mit den Nutflanken 57, 59 deutlich erkennbar.

Die Figur 6 zeigt neben den Einzelteilen gemäß Figur 5 den Fliehkeil 56' der Hobelwelle 20'' in durchgehenden Linien gezeichnet in seiner Normalposition bei Stillstehen der Hobelwelle 20''. Der Fliehkeil 56 in der gestrichelt gezeichneten Position ist radial nach außen verschoben in der äußersten Auslenkungsposition bei Höchstdrehzahl der Hobelwelle ohne ein eingespanntes Hobelmesser. Dabei hält sich der Fliehkeil 56'' mit der Nut 58 über deren Nutflanke 59 am Vorsprung 51 fest, so daß er auch bei extremer Radialbeschleunigung radial nicht weiter nach außen treten kann.

Die Fliehkeile 56', 56'' gemäß den Figuren 5 und 6 unterscheiden sich von den vorherigen Figuren durch einen radial nach innen weisenden Vorsprung 46', der als Hebelarm bzw. als Werkzeugangriffsfläche eines hebelartigen in den Hohlraum 52' einzuführenden Hilfswerkzeugs zum Lösen der Vorspannung dient.

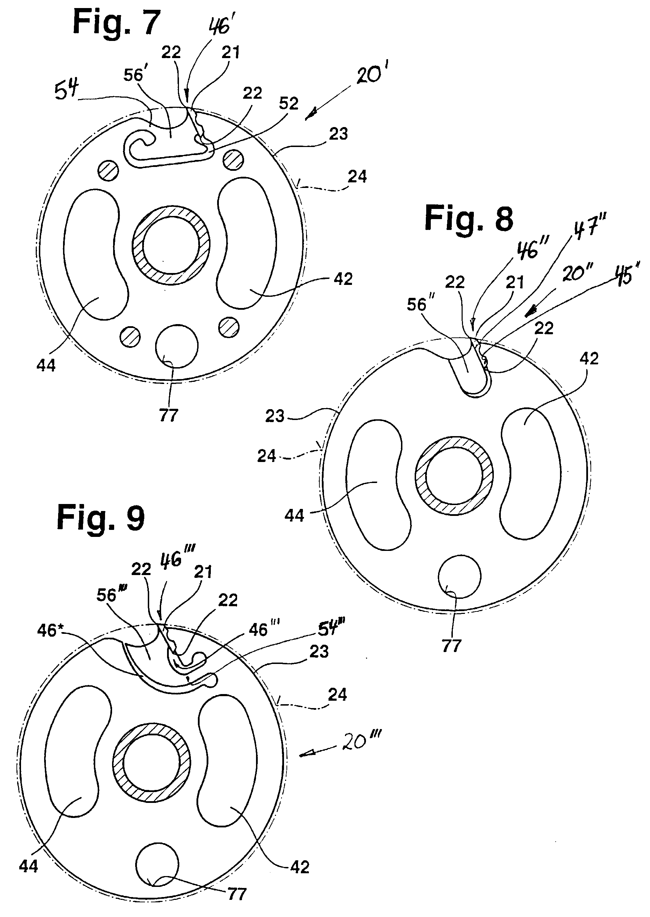

Die Figuren 7, 8 und 9 zeigen Varianten des Hobelwellenquerschnitts bzw. je eine entsprechende Profilscheibe mit unterschiedlichem Radialverlauf der Längsnuten 46', 46'', 46''' mit je nur einem einzigen Hobelmesser 21 und jeweils einer Ausgleichsbohrung 77 zum Unwuchtausgleich, wobei die mit den vorherigen Figuren übereinstimmenden Bezugszeichen zwar in den Figuren enthalten aber nicht in jedem Fall nochmals aufgeführt werden.

Gemäß Figur 7 ist auch für den Fall, daß die Blattfeder 54 reißt, der Fliehkeil 56' an der Hobelwelle 20' gegen Verlieren gesichert, weil sein Querschnitt größer ist als die dabei an der Hobelwelle 20' gebildete größte mögliche Nut zum Austritt des Fliehkeils.

Die Figur 8 zeigt den Querschnitt einer Hobelwelle 20'' bei der die Längsnut 46'' eine u-förmige Radialführung hat. Der Winkel zwischen den Nutflanken 45'', 47'' ist so klein dimensioniert, daß hier nach dem Fliehkraftspannen der Fliehkeil 56'' unter Selbsthemmung in seiner Spannposition verbleibt.

Die Figur 9 zeigt den Querschnitt einer Hobelwelle 20''', bei der zwei im wesentlichen parallel bogenförmig in Betrachtungsrichtung nach rechts geschwungene Längsnuten 46''', 46* den Fliehkeil 56''' bilden, der nach dem Fliehkraftspannen bei Stillstand der Hobelwelle 20''' in die Löseposition zurückkehrt, aus der sich das Hobelmesser 21 leicht entlang seiner Längsachse aus der Längsnut 46''' schieben läßt.

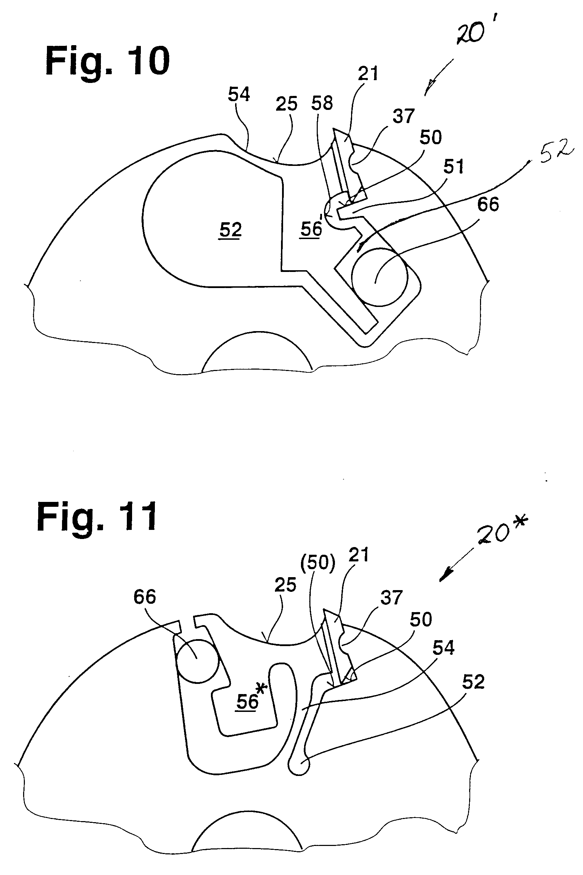

Die Figuren 10 bis 12 zeigen Varianten der Fliehkeilgestaltung erfindungsgemäßer Hobelwellen 20', 20*, 20**, 20*** und 20'''' mit je einer sich zusätzlich am Fliehkeil 56', 56*, 56**, 56*** und 56'''' abstützenden Spannwelle 66. Die Spannwelle 66 rollt radial nach außen, sobald die Hobelwelle rotiert und so daß der Fliehkeil ungehindert in seine Spannposition treten kann und auch bei anschließendem Stillstand der Hobelwelle darin verbleiben kann. Durch radiales Verschieben der Spannwelle 66 nach innen kann der Fliehkeil 56', 56*, 56**, 56*** und 56'''' ohne externes Hilfswerkzeug schnell in seine Löseposition gestellt und das Hobelmesser gewechselt werden.

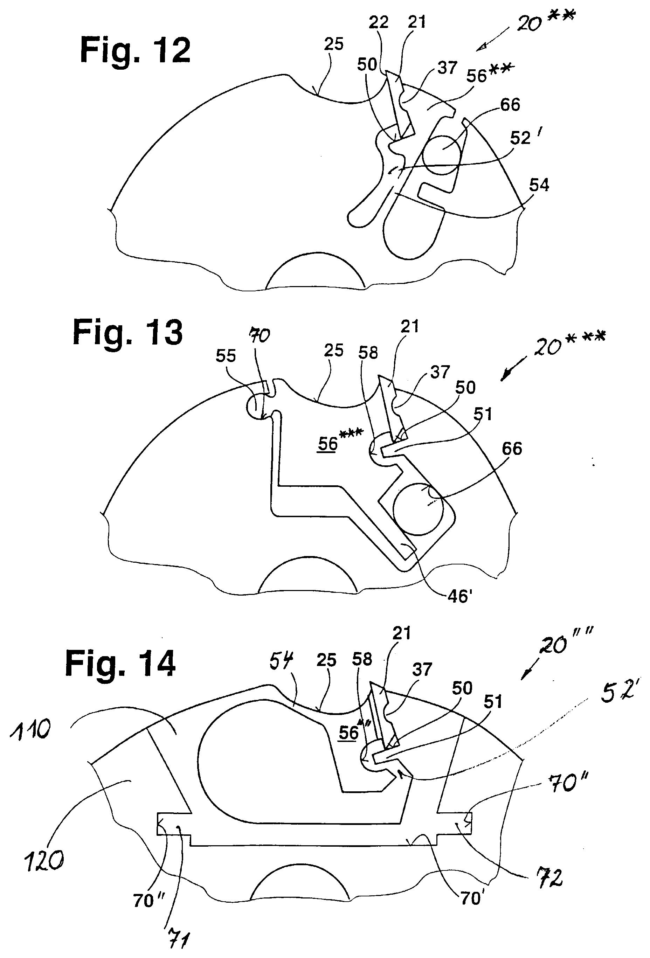

Die Figur 13 zeigt eine Hobelwelle 20***, die aus einem Vollzylinder besteht, in den längs eine Einschubnut 70 gefräst ist, die einen kreisförmigen Bereich aufweist, der als Gelenk und zur Aufnahme eines mit einem Wellenformstück 55 versehenen Fliehkeils 56*** dient. Diese Variante der erfindungsgemäßen Hobelwelle kann aus zwei einfach herstellbaren, vorzugsweise fräsbaren, Einzelteilen kostengünstig hergestellt werden.

Die Figur 14 zeigt eine Hobelwelle 20'''', die wie gemäß Figur 13, ebenfalls aus einem Vollzylinder besteht mit einer breiten, im wesentlichen u-förmigen Einschubnut 70' mit je einer in die Nutflanken nahe dem Nutgrund eingefrästen Seitennut 70'', der den Hobelwellengrundkörper 120 bildet. Die Einschubnut 70' dient zur schubladenartigen Aufnahme eines Einschubteils 110, das mit Haltekeilen 71, 72 in Seitennuten 70'' festhaltend eingreift und das eine Blattfeder 54 mit daran befestigtem Fliehkeil 56'''' trägt. Diese Variante der erfindungsgemäßen Hobelwelle kann ebenso wie die gemäß Figur 13 aus zwei einfach herstellbaren, vorzugsweise fräsbaren, Einzelteilen kostengünstig hergestellt werden.

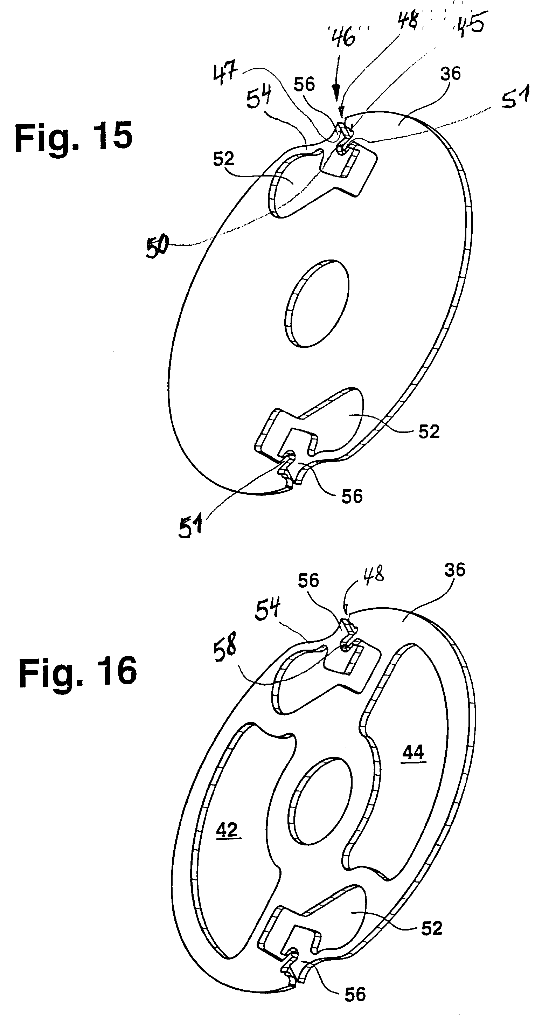

Die Figuren 15, 16 zeigen Profilscheiben 36 gemäß Figur 4 in räumlicher Darstellung, wobei die Profilscheibe 36 gemäß Figur 15 als Deckplatte zum Abschluß eines aus den Profilscheiben 36 gebildeten Paketes dient und zu diesem Zweck keine Hohlräume 42, 44 aufweist.

Der Fliehkeil 56 ist gegenüber der Blattfeder 54 und diese gegenüber der Hobelwelle 20 maßlich unveränderbar festgelegt, so daß sich für den Messerwechsel stets die gleichen Bedingungen hinsichtlich Spannkraft und Lösen und Einsetzen der Hobelmesser ergeben. Der Fliehkeil 56 ist dadurch radial verschwenkbar, daß er an der Blattfeder 54 hängend elastisch geführt ist. Die Schwenkbewegung des Fliehkeils 56 ist begrenzt durch die formschlüssige Festlegung des Fliehkeils 56 gegenüber mit der Fangnut 58 gegenüber der Stufe 51 der Hobelwelle 20.

Die Nutflanke 45 des geraden Bereichs 48 der Längsnut 46 geht in eine rechtwinklige Stufe 50 in Richtung zum Fliehkeil 56 hin über und bildet einen nasenartigen Vorsprung 51, wobei die Stufe 50 als Anschlag der radial innen positionierten Schneide 22 des Hobelmessers 21 dient. Die Stufe 50 hält das Hobelmesser 21 lotrecht, besonders lagesicher in korrekter radialer Position fest und von Winkelfehlern frei, die bei herkömmlichen, Hobelwellen auftreten, an denen nur der Flachseite der Hobelmesser zugeordnete Anschläge vorgesehen sind.

Dabei ist es von Bedeutung, daß die Längsrippe 37 der hobelwellenseitige Nutflanke 47 zum sichernden Eingriff in die Rückennut 35 des Hobelmessers Spiel hat, wobei der Querschnitt der Längsrippe 37 kleiner als der der Rückennut 35 des Hobelmessers 21 ist, so daß sich die radial innenliegende Schneide 22 des Hobelmessers 21 ohne Beeinflussung durch die Längsrippe 37 auf der Stufe 50 abstützen kann.

Bei einem weiteren Ausführungsbeispiel der Erfindung ist eine Längsnut, die der in Figur 2 schematisch eingezeichneten Längsnut 46.9 entspricht, in der Außenkontur 23 der Hobelwelle 20 nicht gerade, achsparallel sondern schräg, insbesondere spiralig gewunden gegenüber der Längsachse der Hobelwelle 20 und dient zur Aufnahme eines Spiral-Hobelmessers, das biegeelastisch ist und das sich infolge seiner Torsion bzw. Biegung beim Einsetzen in die gewundene Längsnut 46.9 selbsttätig darin festhält.

Die erfindungsgemäße Hobelwelle kann gemäß allen Ausführungsbeispielen entweder ein- oder mehrstückig, aus Voll-Material bestehen oder aus Profilscheiben.

## Patentansprüche

1. Hobelmaschine (10), insbesondere Handhobelmaschine für die Holzbearbeitung, mit einem Hobelgehäuse (12), das eine in mindestens einer Richtung drehbar gelagerte Hobelwelle (20) mit innerhalb eines Flugkreises (24) liegender Außenkontur (23) enthält, die in mindestens einer Längsnut (46) mindestens je ein Hobelmesser (21) trägt, das sich an einem mit einer Feder (54) oder dergl. vorspannbaren Fliehkeil (56) abstützt, dadurch gekennzeichnet, daß der Fliehkeil (56) schwenkarmartig bewegbar über eine blattfederartige Feder (54) unverlierbar, insbesondere nicht zerstörungsfrei lösbar, mit der Hobelwelle (20) gekoppelt und mit seinem freien Ende gegenüber der Hobelwelle (20) im wesentlichen berührungsfrei angeordnet ist.

2. Hobelmaschine nach Anspruch 1, dadurch gekennzeichnet, daß der Fliehkeil (56) mit der Feder (54) und die Feder (54) mit der Hobelwelle (20) hinsichtlich der Justierung der Befestigungslage unverstellbar festgelegt sind.

3. Hobelmaschine nach Anspruch 1 oder 2, dadurch gekennzeichnet, daß die Feder (54) mit dem Fliehkeil (56) ein Teil bildet, das schwenkbar gegenüber der Hobelwelle (20) im wesentlichen innerhalb deren Außenkontur (23) gehalten wird.

4. Hobelmaschine nach Anspruch 3, dadurch gekennzeichnet, daß die Feder (54) mit dem Fliehkeil (56) und der Längsnut (46) ein in die Hobelwelle (20) unverlierbar, insbesondere gelenkig gelagert, eingesetztes Teil bildet.

5. Hobelmaschine nach einem der Ansprüche 1 bis 4, dadurch gekennzeichnet, daß die Hobelwelle (20) mit der Feder (54) und dem Fliehkeil (56) ein Teil bildet.

6. Hobelmaschine nach Anspruch 5, dadurch gekennzeichnet, daß die Feder (54) gemeinsam mit dem Fliehkeil (56) durch einen teilweisen Ein- bzw. Ausschnitt (46) der Hobelwelle (20) gebildet werden.

7. Hobelmaschine nach Anspruch 6, dadurch gekennzeichnet, daß der Ein- bzw. Ausschnitt (46) der Hobelwelle (20) eine achsparallele, die Außenkontur durchdringende, durchgehende Längsnut (46) ist, daß ein radialer, gerader Bereich (48) der Längsnut (46) mit zwei Nutflanken (45, 47) zum backenartigen Spannen des Hobelmessers (21) dient.

8. Hobelmaschine nach Anspruch 7, dadurch gekennzeichnet, daß sich im Anschluß an den geraden Bereich (48) die Längsnut (46) bogenartig, insbesondere mit wechselnder Nutbreite, geführt ist und die Kontur des Fliehkeils (56) sowie der Feder (54) bestimmt.

9. Hobelmaschine nach Anspruch 8, dadurch gekennzeichnet, daß die Nutbreite des geraden Bereichs (48) geringfügig kleiner als die Stärke des Hobelmessers (21) ist.

10. Hobelmaschine nach einem der vorhergehenden Ansprüche, dadurch gekennzeichnet, daß ein bogenartiger Bereich (52) der Längsnut (46) nach außen bis nahe zur Außenkontur (23) der Hobelwelle (20) reicht und dort entgegen bzw. in Drehrichtung parallel und radial nach innen in Richtung zur Längsnut (46) zurückführt, so daß der bogenartige Bereich (52) U-förmig oder C-förmig ausgebildet ist.

11. Hobelmaschine nach Anspruch 7 bis 10, dadurch gekennzeichnet, daß neben der ersten (46''') eine zweite radiale, in eine bogenförmige Nut übergehende Längsnut (46*) angeordnet ist, wobei zwischen den beiden Nuten (46''', 46*) die Feder (54''') und der Fliehkeil (56''') gebildet werden.

12. Hobelmaschine nach Anspruch 7 bis 11, dadurch gekennzeichnet, daß durch die mindestens eine Nut (46) eine Blattfeder (54) mit einem sich daran anschließenden, sich zu einem Fliehkeil (56) verdickenden Bereich der Hobelwelle (20) gebildet wird.

13. Hobelmaschine nach einem der vorhergehenden Ansprüche, dadurch gekennzeichnet, daß der Fliehkeil (56) radial verschwenkbar ist, wobei er an der Blattfeder (54) hängend elastisch geführt ist.

14. Hobelmaschine nach einem der vorhergehenden Ansprüche, dadurch gekennzeichnet, daß die hobelwellenseitige Nutflanke (47) des geraden Bereichs (48) der Längsnut (46) in eine rechtwinklige Stufe (50) in Richtung zum Fliehkeil (56) hin übergeht und dort einen nasenartigen Vorsprung (51) bildet.

15. Hobelmaschine nach einem der vorhergehenden Ansprüche, dadurch gekennzeichnet, daß die Stufe (50) als Anschlag für die gegenüber der Hobelwelle (20) radial nach innen weisende Schneide (22) des Hobelmessers (21) dient, das als Hartmetall-Mini-Wendeplatte, als Hartmetall-Wellmesser oder als Spiralmesser ausgestaltet ist und damit die Position der ra dial nach außen weisenden Schneide (22) bzw. den Flugkreis (24) bestimmt.

16. Hobelmaschine nach einem der vorhergehenden Ansprüche, dadurch gekennzeichnet, daß der Vorsprung (51) insbesondere auf der der Stufe (50) abgewandten Seite als Anschlag zur Begrenzung der Auslenkung des Fliehkeils (56) radial nach außen dient.

17. Hobelmaschine nach einem der vorherigen Ansprüche, dadurch gekennzeichnet, daß sich die Längsnut (46) im Anschluß an den Vorsprung (51) verbreitert und einen Hohlraum (52') zum Eingriff eines Schraubendrehers oder dergl. zum Verschwenken des Fliehkeils (56) zum Lösen des Hobelmessers (21) bildet.

18. Hobelmaschine nach einem der vorhergehenden Ansprüche, dadurch gekennzeichnet, daß die hobelwellenseitige Nutflanke (45) eine Längsrippe (37) zum sichernden Eingriff in eine Rückennut (35) des Hobelmessers (21) hat, wobei der Querschnitt der Längsrippe (37) kleiner als der der Rückennut (35) ist.

19. Hobelmaschine nach einem der vorhergehenden Ansprüche, dadurch gekennzeichnet, daß die Hobelwelle (20) aus axial nebeneinander angeordneten, Profilscheiben (36), insbesondere aus Federblech, besteht.

20. Hobelmaschine nach Anspruch 19, dadurch gekennzeichnet, daß die Profilscheiben (36) miteinander vernietet, verschweißt, verpreßt, umspritzt oder dergl. verbunden sind.

21. Hobelmaschine nach Anspruch 19, dadurch gekennzeichnet, daß die Profilscheiben (36) einen Abschnitt der Längsnut (46) tragen, wobei die Nutbreite mindestens einer der äußeren Profilscheiben (36) der Hobelwelle (20) kleiner als die Stärke des Hobelmessers (21) ist und zum Sichern des Hobelmessers (21) gegen Verlieren bei Stillstand der Hobelwelle (20) dient.

22. Hobelmaschine nach einem der vorhergehenden Ansprüche, dadurch gekennzeichnet, daß das Hobelgehäuse (12) mindestens eine seitliche Durchtrittsöffnung (32, 34) zum Einsetzen und Entnehmen des Hobelmessers (21) in die Hobelwelle (20) aufweist.

23. Hobelmaschine nach einem der vorhergehenden Ansprüche, dadurch gekennzeichnet, daß die Längsnut (46) in der Außenkontur (23) der Hobelwelle (21) schräg, insbesondere spiralig gewunden gegenüber der Längsachse der Hobelwelle (20) verläuft und zur Aufnahme eines Spiral-Hobelmessers (21') dient.

24. Hobelmaschine nach einem der vorhergehenden Ansprüche, daß die Längsnut (46) im Inneren der Hobelwelle (20) einen derart konturierten Hohlraum (52) bildet, daß der Fliehkeil (56) daraus radial nicht austreten kann, insbesondere zu dessen Lagesicherung bei Zerstörung der Blattfeder (54).

25. Hobelmaschine nach einem der vorhergehenden Ansprüche, dadurch gekennzeichnet, daß sich im Inneren der Hobelwelle (20) in der Längsnut (46) angeordnet am Fliehkeil (56) ein gleitend oder rollend angeordneter Spreizkeil (66) abstützt, der bei Drehung der Hobelwelle (20) den Fliehkeil (56) in seiner Spannstellung arretiert und bei Stillstand der Hobelwelle (20) arretiert hält wobei er durch radiales Verschieben den Fliehkeil (56) freigibt und als Schnellösemittel zum Wechseln des Hobelmessers (21) dient.

26. Hobelwelle für eine Hobelmaschine nach dem Oberbegriff des Anspruchs 1, dadurch gekennzeichnet, daß sie nach einem der kennzeichnenden Merkmale der Ansprüche 1 bis 25 ausgestaltet ist.

## Claims

1. Planing machine (10), in particular hand-held planing machine for woodworking, having a plane housing (12), which contains a plane shaft (20) which is mounted so that it can rotate in at least one direction, has an external contour (23) which lies inside an orbit (24) and supports at least one planing blade (21) in each at least one longitudinal groove (46), which planing blade is supported against a centrifugal wedge (56) which can be prestressed by means of a spring (54) or the like, characterized in that the centrifugal wedge (56) is coupled to the plane shaft (20) in such a manner that it can move in the manner of a pivot arm, is held captive by means of a spring (54) in the form of a leaf spring, and can be released in particular without being destroyed, and the free end of the centrifugal wedge is arranged so that it is essentially free from contact with the plane shaft (20).

2. Planing machine according to Claim 1, characterized in that the centrifugal wedge (56) together with the spring (54) and the spring (54) together with the plane shaft (20) are fixed immovably with regard to the adjustment of the attachment position.

3. Planing machine according to Claim 1 or 2, characterized in that the spring (54), together with the centrifugal wedge (56), forms a part which is held so that it can pivot with respect to the plane shaft (20) essentially inside the outer contour (23) of this shaft.

4. Planing machine according to Claim 3, characterized in that the spring (54), together with the centrifugal wedge (56) and the longitudinal groove (46), forms a part which is fitted into the plane shaft (20) in a captive manner and in particular so that it is articulately mounted.

5. Planing machine according to one of Claims 1 to 4, characterized in that the plane shaft (20) is integral with the spring (54) and the centrifugal wedge (56).

6. Planing machine according to Claim 5, characterized in that the spring (54), together with the centrifugal wedge (56), is formed by a partial incision or cutout (46) in the plane shaft (20).

7. Planing machine according to Claim 6, characterized in that the incision or cutout (46) in the plane shaft (20) is an axially parallel, continuous longitudinal groove (46) which penetrates through the outer contour, and in that a radial, straight area (48) of the longitudinal groove (46), with two groove flanks (45, 47), serves to the clamp the planing blade (21) in the manner of jaws.

8. Planing machine according to Claim 7, characterized in that, following the straight area (48), the longitudinal groove (46) is guided in the form of a curve, in particular with a varying groove width, and determines the contour of the centrifugal wedge (56) and of the spring (54).

9. Planing machine according to Claim 8, characterized in that the groove width of the straight area (48) is slightly less than the thickness of the planing blade (21).

10. Planing machine according to one of the preceding claims, characterized in that a curved area (52) of the longitudinal groove (46) extends outwards as far as close to the external contour (23) of the plane shaft (20) and there returns parallel and radially inwards, in the direction towards the longitudinal groove (46), in or opposite to the direction of rotation, so that the curved area (52) is of U-shaped or C-shaped design.

11. Planing machine according to Claims 7 to 10, characterized in that next to the first longitudinal groove (46''') there is a second radial longitudinal groove (46*) which merges into a curved groove, the spring (54''') and the centrifugal wedge (56''') being formed between the two grooves (46''', 46*).

12. Planing machine according to Claims 7 to 11, characterized in that a leaf spring (54), with an adjoining area of the plane shaft (20), which area increases in thickness into a centrifugal wedge (56), is formed by the at least one groove (46).

13. Planing machine according to one of the preceding claims, characterized in that the centrifugal wedge (56) can be pivoted radially, being guided so that it is suspended elastically from the leaf spring (54).

14. Planing machine according to one of the preceding claims, characterized in that the plane-shaft-side groove flank (47) of the straight area (48) of the longitudinal groove (46) merges into a right-angled step (50) in the direction towards the centrifugal wedge (56), and there forms a lug-like projection (51).

15. Planing machine according to one of the preceding claims, characterized in that the step (50) serves as a stop for the cutting edge (22), which faces radially inwards with respect to the plane shaft (20), of the planing blade (21), which planing blade is designed as a mini sintered-carbide throw-away tool tip, as a sintered-carbide corrugated blade or as a spiral blade and thus determines the position of the cutting edge (22) facing radially outwards and/or the orbit (24).

16. Planing machine according to one of the preceding claims, characterized in that the projection (51), in particular on the side facing away from the step (50) serves as a stop for limiting the deflection of the centrifugal wedge (56) in the radially outward direction.

17. Planing machine according to one of the preceding claims, characterized in that the longitudinal groove (46) widens after the projection (51) and forms a cavity (52') for a screwdriver or the like to engage in in order to pivot the centrifugal wedge (56) in order to release the planing blade (21).

18. Planing machine according to one of the preceding claims, characterized in that the plane-shaft-side groove flank (45) has a longitudinal rib (37) for engaging, in a securing manner, in a back groove (35) of the planing blade (21), the cross section of the longitudinal rib (37) being smaller than that of the back groove (35).

19. Planing machine according to one of the preceding claims, characterized in that the plane shaft (20) comprises profiled discs (36) which are arranged axially next to one another and are made in particular from spring sheet steel.

20. Planing machine according to Claim 19, characterized in that the profiled discs (36) are joined together by riveting, welding, pressing, injection-moulding or the like.

21. Planing machine according to Claim 19, characterized in that the profiled discs (36) bear a section of the longitudinal groove (46), the groove width of at least one of the outer profiled discs (36) of the plane shaft (20) being smaller than the thickness of the planing blade (21) and serving to secure the planing blade (21) so that it is captive when the plane shaft (20) is at a standstill.

22. Planing machine according to one of the preceding claims, characterized in that the plane housing (12) has at least one lateral passage opening (32, 34) for inserting and removing the planing blade (21) into and from the plane shaft (20).

23. Planing machine according to one of the preceding claims, characterized in that the longitudinal groove (46) in the external contour (23) of the plane shaft (21) runs at an angle, and in particular in spiral form, with respect to the longitudinal axis of the plane shaft (20) and serves to accommodate a spiral planing blade (21').

24. Planing machine according to one of the preceding claims, characterized in that the longitudinal groove (46), in the interior of the plane shaft (20), forms a cavity (52) which is contoured in such a way that the centrifugal wedge (56) cannot move radially out of this cavity, in particular in order to secure the position of this wedge in the event of the leaf spring (54) being destroyed.

25. Planing machine according to one of the preceding claims, characterized in that an expanding wedge (66), which is arranged in a sliding or rolling manner, is arranged in the longitudinal groove (46) inside the plane shaft (20), supported on the centrifugal wedge (56), which expanding wedge, when the plane shaft (20) is rotating, locks the centrifugal wedge (56) in its clamped position, and when the plane shaft (20) is at a standstill stays in a locked position but releases the centrifugal wedge (56) by being displaced radially, thus serving as a rapid-release means for changing the planing blade (21).

26. Plane shaft for a planing machine according to the preamble of Claim 1, characterized in that it is designed according to one of the characterizing features of Claims 1 to 25.

## Revendications

1. Raboteuse (10), en particulier raboteuse manuelle, pour le travail du bois, avec un carter de rabot (12), contenant un arbre de rabot (20) monté tournant au moins dans une direction, avec un contour extérieur (23) situé à l'intérieur d'une trajectoire circulaire de vol (24), portant, dans au moins une rainure longitudinale (46), chaque fois au moins une lame de rabot (21) qui prend appui sur un élément cunéiforme sensible à la force centrifuge (56) pouvant être précontraint au moyen d'un ressort (54) ou analogue,
caractérisée en ce que
l'élément cunéiforme sensible à la force centrifuge (56) est couplé à l'arbre de rabot (20), de façon imperdable, en particulier en n'étant pas désolidarisable sans provoquer de destruction, en étant déplaçable à la façon d'un bras pivotant, par l'intermédiaire d'un ressort (54) du genre ressort à lame, et son extrémité libre restant pratiquement sans contact vis-à-vis de l'arbre de rabot (20).

2. Raboteuse selon la revendication 1,
caractérisée en ce que
l'élément cunéiforme sensible à la force centrifuge (56) avec le ressort (54) et le ressort (54) avec l'arbre de rabot (20), sont fixés de façon à empêcher tout changement de réglage, du point de vue de l'ajustement de la position de fixation.

3. Raboteuse selon la revendication 1 ou 2,
caractérisée en ce que
le ressort (54) avec l'élément cunéiforme sensible à la force centrifuge (56) constitue une pièce qui est maintenue de façon pivotante par rapport à l'arbre de rabot (20), sensiblement à l'intérieur de son contour extérieur (23).

4. Raboteuse selon la revendication 3,
caractérisée en ce que
le ressort (54) constitue, avec l'élément cunéiforme sensible à la force centrifuge (56) et la rainure longitudinale (46), une partie insérée de façon imperdable dans l'arbre de rabot (20), en particulier montée de façon articulée.

5. Raboteuse selon l'une des revendications 1 à 4,
caractérisée en ce que
l'arbre de rabot (20) constitue avec le ressort (54) et l'élément cunéiforme sensible à la force centrifuge (56) un seul élément.

6. Raboteuse selon la revendication 5,
caractérisée en ce que
le ressort (54) conjointement avec l'élément cunéiforme sensible à la force centrifuge (56) constitué par un entaille ou une découpure (46) partielle de l'arbre creux (20).

7. Raboteuse selon la revendication 6,
caractérisée en ce que
l'entaille ou la découpure (46) de l'arbre creux (20) est une rainure longitudinale (46) continue, parallèle à l'axe traversant le contour extérieur, en ce qu'une zone rectiligne (48) radiale de la rainure longitudinale (46) sert avec deux flancs de rainures (45, 47) à serrer à la façon de mâchoires la lame de rabot (21).

8. Raboteuse selon la revendication 7,
caractérisée en ce qu'
en raccordement à la zone rectiligne (48), la rainure longitudinale (46) est tracée d'une façon arquée, en particulier avec une largeur de rainure allant en alternant et détermine le contour de l'élément cunéiforme sensible à la force centrifuge (56) ainsi que du ressort (54).

9. Raboteuse selon la revendication 8,
caractérisée en ce que
la largeur de rainure de la zone rectiligne (48) est légèrement inférieure à l'épaisseur de la lame de rabot (21).

10. Raboteuse selon l'une des revendications précédentes,
caractérisée en ce qu'
une zone (52) en forme d'arc de la rainure longitudinale (46) arrive vers l'extérieur jusqu'à proximité du contour extérieur (23) de l'arbre de rabot (20) et, à cet endroit, revient sur son chemin à l'encontre ou dans le sens de rotation, parallèlement et radialement vers l'intérieur en direction de la rainure longitudinale (46), si bien que la zone (52) du genre d'un arc est en forme de U ou en forme de C.

11. Raboteuse selon l'une des revendications 7 à 10,
caractérisèe en ce qu'
outre la première rainure longitudinale (46''') est disposée une deuxième rainure longitudinale (46*) radiale, se transformant en une rainure en forme d'arc, le ressort (54''') et l'élément cunéiforme sensible à la force centrifuge (56''') étant constitués entre les deux rainures (46''', 46*).

12. Raboteuse selon les revendications 7 à 11,
caractérisée en ce qu'
au moyen de la au moins une rainure (46) est constituée un ressort à lame (54), une zone de l'arbre de rabot (20), y étant raccordée, allant en s'épaississant pour donner un élément cunèiforme sensible à la force centrifuge (56).

13. Raboteuse selon l'une des revendications précédentes,
caractérisée en ce que
l'élément cunéiforme sensible à la force centrifuge (56) est susceptible de pivoter radialement, en étant guidé avec une élasticité en suspension sur le ressort à lame (54).

14. Raboteuse selon l'une des revendications précédentes,
caractérisée en ce que
le flanc de rainure (47), situé du côté de l'arbre de rabot, de la zone rectiligne (48) de la rainure longitudinale (46) se transforme en un gradin (50) à angle droit dans la direction de l'élément cunéiforme sensible à la force centrifuge (56) et constitue à cet endroit une saillie (51) du genre ergot.

15. Raboteuse selon l'une des revendications précédentes,
caractérisée en ce que
le gradin (50) sert de butée pour le tranchant (22), tourné radialement vers l'intérieur par rapport à l'arbre de rabot (20), de la lame de rabot (21) qui est configurée sous la forme d'une mini-plaque réversible en métal dur, d'une lame ondulée en métal dur ou d'une lame spirale et ainsi détermine la position du tranchant (22) tourné radialement vers l'extérieur ou de la trajectoire circulaire (24).

16. Raboteuse selon l'une des revendications précédentes,
caractérisée en ce que
la saillie (51) sert de butée en particulier sur la face opposée au gradin (50), pour limiter le débattement articulé de la partie d'élément cunéiforme (56) radialement vers l'extérieur.

17. Raboteuse selon l'une des revendications précédentes, caractérisée en ce que
la rainure longitudinale (46) va en s'élargissant en raccordement à la saillie (51) et constitue un espace creux (52') pour l'engagement d'un tournevis ou analogue, afin de faire pivoter l'élément cunéiforme sensible à la force centrifuge (56) pour desserrer ou désolidariser la lame de rabot (21).

18. Raboteuse selon l'une des revendications précédentes,
caractérisée en ce que
le flanc de rainure (45) situé du côté de l'arbre de rabot comporte une nervure longitudinale (37) destinée à s'engager, dans un but de mise en sécurité, dans une rainure dorsale (35) de la lame de rabot (21), la section transversale de la nervure longitudinale (37) étant plus petite que celle de la rainure dorsale (35).

19. Raboteuse selon l'une des revendications précédentes,
caractérisée en ce que
l'arbre de rabot (20) est constitué de rondelles ou disques profilé(e)s (36), en particulier de tôle à ressort, disposés axialement les uns à côté des autres.

20. Raboteuse selon la revendication 19,
caractérisée en ce que
les disques profilés (36) sont reliés ensemble par rivetage, soudage, pressage, enrobage ou analogue.

21. Raboteuse selon la revendication 19,
caractérisée en ce que
les disques profilés (36) portent un tronçon de la rainure longitudinale (46), la largeur de rainure d'au moins l'un des disques profilés (36) extérieurs de l'arbre de rabot (20) étant inférieure à l'épaisseur de la lame de rabot (21) et sert à assurer la lame de rabot (21) pour empêcher toute perte, lorsque l'arbre de rabot (20) est à l'arrêt.

22. Raboteuse selon l'une des revendications précédentes,
caractérisée en ce que
le carter de rabot (12) présente au moins une ouverture de passage latérale (32, 34) destinée à l'insertion et au prélèvement de la lame de rabot (21) dans l'arbre de rabot (20).

23. Raboteuse selon l'une des revendications précédentes,
caractérisée en ce que
la rainure longitudinale (46) s'étend dans le contour extérieur (23) de l'arbre de rabot (21) obliquement, en particulier en spirale par rapport à l'axe longitudinal de l'arbre de rabot (20) et sert à recevoir une lame de rabot spirale (21').

24. Raboteuse selon l'une des revendications précédentes,
caractérisée en ce que
la rainure longitudinale (46) constitue, à l'intérieur de l'arbre de rabot (20), un espace creux (52) configuré de manière que l'élément cunéiforme sensible à la force centrifuge (56) ne puisse pas sortir radialement, en particulier pour assurer sa sécurité de position en cas de destruction du ressort à lame (54).

25. Raboteuse selon l'une des revendications précédentes,
caractérisée en ce qu'
à l'intérieur de l'arbre de rabot (20) dans la rainure longitudinale (46) est disposé sur l'élément cunéiforme sensible à la force centrifuge (56) un élément cunéiforme d'écartement (66) disposé de façon à pouvoir glisser ou rouler, qui, lors de la rotation de l'arbre de rabot (20), bloque l'élément cunéiforme sensible à la force centrifuge (56) à sa position de serrage et, lors de l'arrêt de l'arbre de rabot (20), le maintient bloqué, en libérant l'élément cunéiforme sensible à la force centrifuge (56) par un déplacement radial il en servant de moyen de désolidarisation rapide pour procéder au remplacement de la lame de rabot (21).

26. Arbre de rabot pour une raboteuse selon le préambule de la revendication l,
caractérisé en ce qu'
il est configuré selon l'une des parties caractérisantes des revendications 1 à 25.
